# EUROPEAN PATENT SPECIFICATION

(11) **EP 4 119 396 B1**
(45) Date of publication and mention of the grant of the patent: **08.05.2024**
(21) Application number: 21185756.0
(22) Date of filing: 15.07.2021
(51) Int. Cl.: B60R 9/04, B60R 13/10, G09F 21/04

(54) **APPARATUS FOR MOUNTING ON A VEHICLE ROOF AND FOR DISPLAYING INFORMATION**
VORRICHTUNG ZUR MONTAGE AN EINEM FAHRZEUGDACH UND ZUR INFORMATIONSANZEIGE
APPAREIL À MONTER SUR LE TOIT D'UN VÉHICULE POUR AFFICHER DES INFORMATIONS

(43) Date of publication of application: 18.01.2023
(73) Proprietor: Uze! Mobility GmbH, 28215 Bremen (DE)
(72) Inventor: Röbbelen, Falk, 22455 Hamburg (DE); Jablovski, Alexander N., 28213 Bremen (DE); Wellner, Henning, 22767 Hamburg (DE); Baschin, Johannes, 25548 Kellinghusen (DE); Leimbrink, Sebastian, 52072 Aachen (DE)
(74) Representative: Glawe, Delfs, Moll

(56) References cited:
- EP-A1- 3 438 959
- WO-A1-2015/191866
- NL-A- 8 801 722
- US-A1- 2018 272 959
- US-A1- 2020 380 896

## Description

The present invention relates to an apparatus for mounting on a vehicle roof and for displaying information.

It is known to mount such apparatuses on the roof of a car in order to show information, such as advertisement, to the surroundings of the vehicle. For instance, US 2018/0272959 A1 discloses a cross bar for mounting a vehicle topper to a roof of a vehicle according to the preamble of claim 1, which has a center section with a substantially rectangular cross section, wherein tapered sections are attached at a proximal end to each side of the center section and wherein outer plates are located on the distal end of each respective tapered section.

A problem arising in the prior art is that the operating conditions on the top of the vehicle are challenging. In particular, mechanical stress caused by speed changes or concussions which are transmitted from the moving vehicle to the housing may impair the integrity of the housing and of the components arranged therein.

In view of the above, it is an object of the present invention to provide an apparatus for mounting on a vehicle roof which allows a more reliable operation. The object is solved by the features of the independent claims. Preferable embodiments are described in the dependent claims.

The inventive apparatus comprises a housing and a mounting fixture configured to support the housing. The housing encloses at least one display. According to the invention, the mounting fixture comprises a carrier being attachable to the roof of the vehicle and a damping unit which connects the carrier to the housing, wherein the damping unit is configured to allow movement of the housing relative to the carrier against a restoring force.

The carrier may be attached to the roof of the vehicle. The carrier usually has a longitudinal extension which may be oriented along the longitudinal axis of the vehicle. Herein the vehicle roof is considered as defining a horizontal reference plane. The term "vertical" is considered to be an orientation which is perpendicular to this reference plane.

The carrier is usually firmly attached to the roof of the vehicle so that any movements of the vehicle are directly transmitted to the carrier. This may cause large forces acting on the carrier in case the vehicle performs strong braking operations or moves over uneven surfaces. By means of the inventive damping unit, however, which connects the carrier to the housing, the forces are not fully transmitted from the carrier to the housing. Rather, due to the movability of the housing relative to the carrier against a restoring force, at least a part of the forces is compensated. The inventive features may reliably protect the housing and the components arranged therein against mechanical damage.

The display may be a flat panel display such as a liquid crystal display (LCD), a light emitting diode (LED) display, or an electronic paper display. A horizontal length of the display may be between 80 cm and 120 cm and a vertical height may be between preferably between 15 cm and 40 cm. The apparatus may comprise a single display. However, in a preferable embodiment the apparatus comprises two displays being arranged such that the viewing sides of the displays are directed into opposite directions. This allows viewing information from two opposite sides of the vehicle.

The housing preferably encloses the display or displays in order to prevent external influences, such as rain or soil, to inadvertently affect the elements arranged inside the housing. In front of the display(s) the housing may comprise a transparent cover to allow visibility of the display(s) from the outside. The housing may be arranged on the roof of the vehicle such that a viewing plane of the display or displays is arranged essentially parallel to a longitudinal axis of the vehicle and perpendicular to a horizontal plane.

The housing may comprise a single connection point at which it is connected to the carrier by means of the damping unit in order to be supported with regard to the carrier. However, in a preferred embodiment, the housing comprises two connection points being arranged at opposite sides of the housing. In this case, the apparatus may comprise two damping units, wherein each damping unit is connected to a respective connection point of the housing. In parts of the following description reference is made to only a single connection point and/or to a single damping unit for the sake of simplicity. However, it is to be understood that the present disclosure may also comprise embodiments having two or more connection points and/or corresponding damping units.

According to the invention, the damping unit comprises a mounting member which holds the housing and a restoring element which is arranged between the mounting member and the carrier. In that case the housing and the mounting member are movable together with regard to the carrier, wherein the movement charges the restoring element. The mounting member may in this case be configured for connection with the connection point of the housing.

The mounting member is arranged above the carrier. Furthermore, the mounting member may be movable along a direction which encloses an angle with a horizontal plane, wherein the angle is preferably between 70° and 110°, further preferably between 80° and 100°, even further preferably between 85° and 95°. This configuration allows the mounting member (as well as the housing connected thereto) to move essentially vertically towards or away from the carrier. This allows an efficient attenuation of vertical accelerations of the vehicle which may arise, for instance, if the vehicle drives over bumpy roads. The damping unit comprises a guide for linearly guiding the mounting member with regard to the carrier. The guide may have a main direction corresponding to the above-noted direction of movability of the mounting member. The guide further may have a clearance allowing movement of the mounting member (and the housing attached thereto) along directions being perpendicular to the main direction of the guide, the clearance being smaller than 10 mm, preferably smaller than 5 mm, further preferably smaller than 3 mm, even further preferably smaller than 1,5 mm.

In an embodiment the restoring element comprises a spring element, wherein the spring element preferably connects the mounting member to the carrier. Using a spring element is advantageous in that it has a main axis along which it can be compressed and/or extended to cause a restoring force. This main axis may be oriented along the above-noted direction of movability of the mounting element. In particular, the main axis may be oriented essentially vertical in order to efficiently absorb vertical accelerations of the vehicle. Further, a spring element may also be deflected in a plane perpendicular to the main axis against a restoring force so that forces along other directions may lik 4a be attenuated.

Alternatively or in addition, the restoring element may comprise a resilient member. The resilient member may be compressed if the mounting member is moved towards the carrier.

The housing may be configured to be rotatable between a deployed position and a rest position. For instance, the connection point of the housing may comprise a trunnion and the mounting member may comprise a corresponding socket for receiving the trunnion. The housing may be rotatable with respect to the carrier around an axis of the trunnion.

The apparatus may further comprise a locking lever configured to be moved into a locking position to arrest the housing in the deployed position. The locking lever may be fixed with regard to the carrier. The locking lever may comprise a recess for engaging around a locking pin of the housing, wherein a resilient locking member is arranged in the recess, the resilient locking member being configured to be deformed by the locking pin upon movement of the locking lever into the locking position, wherein the resilient locking member is preferably configured to engage behind the locking pin in the locking position. If the resilient locking member needs to be deformed to allow passage of the locking pin and engages behind the locking pin, the locking lever is reliably held in the locking position. The recess may comprise a cavity for receiving the resilient locking member. The resilient locking member is further preferably attached to the locking lever by means of an adhesive. Further preferably, an inner wall of the cavity comprises at least one cutout for receiving the adhesive. The group of features noted in this paragraph may constitute an invention on its own, even without provision of a damping unit which connects the carrier to the housing, wherein the damping unit is configured to allow movement of the housing relative to the carrier against a restoring force.

In an embodiment, the locking lever has a first leg and a second leg, the legs enclosing an angle between each other which is 70° to 110°, preferably 80° to 100°, further preferably 85° to 95°. The locking lever may, in particular, be L-shaped. The first leg may be longer than the second leg and may be configured to be gripped by a user for moving the lever between the locking and unlocking positions. The recess may be arranged at the second leg. The locking lever is preferably connected to the carrier at an attachment point located in an area of a transition between the first and second legs of the locking lever. Furthermore, the area of transition may preferably comprise a strengthened portion which is arranged on the inside of the attachment point between the locking lever and the carrier. The locking lever may also comprise a strengthened portion which is positioned at the second leg opposite the recess. The strengthened portions may, in particular, be configured as rounded portions. The group of features noted in this paragraph may constitute an invention on its own, even without provision of a damping unit which connects the carrier to the housing, wherein the damping unit is configured to allow movement of the housing relative to the carrier against a restoring force.

In a preferable embodiment the apparatus comprises a first display having a first viewing side and a second display having a second viewing side, wherein the housing encloses the first display and the second display and wherein the housing comprises
- a first frame module enclosing the first viewing side and a circumference of the first display,
- a second frame module enclosing the second viewing side and a circumference of the second display, and
- a middle frame module being arranged between the first and second frame modules and configured to sealingly engage the first and second frame modules so that the first display and the second display are enclosed by the housing.

This construction is particularly beneficial, as it allows to separately manufacture the first and second frame modules to which a respective display and further components such as electronics and sensors may be attached and to subsequently assemble the housing in an efficient manner. The above-described idea to assemble the housing by means of three separate frame modules may constitute an invention on its own, even without provision of a damping unit which connects the carrier to the housing, wherein the damping unit is configured to allow movement of the housing relative to the carrier against a restoring force.

In a preferable embodiment, the first display is attached to the first frame module and the second display is attached to the second frame module. Further electronic components such as control hardware for driving the display, data communication equipment, data storage devices, or sensors may likewise be mounted in the first and/or second frame module prior to attaching the modules to the middle frame module.

The first and second frame modules may each comprise attachment elements which overlap with corresponding attachment elements of the middle frame module. The attachment elements are brought into overlap during assembly by moving the first/second frame module towards the middle frame module. Preferably, the attachment elements are accessible from the outside of the housing and allow fixing the first and/or second frame modules to the middle frame module. The middle frame module may, in particular, have a first group of attachment elements overlapping with the attachment elements of the first frame module and a second group of attachment elements overlapping with the attachment elements of the second frame module.

The first and second frame modules and the middle frame module have an outer contour viewed in a direction of stacking of the first / second frame module. A sealing element may be placed between at least one of the first or second frame modules and the middle frame module. The sealing element may have the shape of an endless band and may be configured to be placed along an outer contour of the first/second frame modules. At least one of the first, second or middle frame modules may comprise an outer ridge around its outer contour to prevent the sealing element from moving to the outside of the housing during assembly.

During assembly, the attachment elements may be brought into overlap in order to fix the modules together. At the same time the sealing element is preferably compressed to ensure that the inside of the housing is sealed from the outside. The attachment elements may be positioned such that an overlap of the attachment elements comes along with a compression of the sealing element. This allows to ensure a sufficient sealing action.

The attachment elements may, for instance, be configured as through-holes which, in the assembled state of the housing, overlap with corresponding through-holes of the respective adjacent frame module. Fastening elements may be inserted through the overlapping through-holes in order to secure the modules together.

In an embodiment, the first frame module is configured such that it can be interchangeably used as a second frame module. In particular, the attachment elements of middle frame module may be provided in a rotationally symmetric manner with regard to a rotation about a middle axis of the middle frame module. The middle axis may be perpendicular to the direction of stacking of the first, second, and middle frame modules. The above-noted features allow a considerable reduction in production costs, as one and the same frame module may be used both as the first and second frame module and, accordingly, the number of variants to be produced is reduced.

The invention is furthermore directed to a kit comprising an inventive apparatus for mounting on a vehicle roof and at least one attachment bracket for fixing the carrier to a roof rack of the vehicle.

The attachment bracket is configured to engage around the carrier and preferably comprises fastening elements for fixing the bracket to a crossbeam of the roof rack. The cross beam may be arranged along a transverse direction of the vehicle. The above-noted kit may constitute an invention of its own, even without provision of a damping unit which connects the carrier to the housing, wherein the damping unit is configured to allow movement of the housing relative to the carrier against a restoring force.

The different aspects of the invention are particularly beneficial in that they allow a safe operation of delicate electronic components such as a control unit for driving the display, data communication equipment, data storage devices, and environmental sensors to be introduced into the housing and to be safely operated on the roof of the vehicle. By means of the inventive aspects such components are, on the one hand, safely protected from mechanical stress and, on the other hand, safely sealed from outer influences such as rain or soil. In particular, the inventive aspects allow the introduction and operation of sensors for the collection of traffic data and/or environmental data (such as temperature data and/or humidity data) and/or geographic position data and/or demographic data (such as the age and/or gender of pedestrians in the vicinity of the inventive apparatus) in an economically efficient manner. The collected data may be used for controlling the content which is displayed on the inventive apparatus.

The invention is further described in the following by means of preferable embodiments which are illustrated by the attached drawings which show:
- Fig. 1:: a side view of an apparatus for mounting on a vehicle roof according to the invention;
- Fig. 2:: a side view of the apparatus of Figure 1 at a higher detail;
- Fig. 2a:: a perspective view of an attachment bracket for fixing the apparatus to a roof rack of the vehicle in a perspective view,
- Fig. 2b:: the attachment bracket of Figure 2a in a front view,
- Fig. 3:: a top view of the apparatus of Figure 1;
- Fig. 4:: a bottom view of the apparatus of Figure 1;
- Fig. 5:: a three-dimensional illustration of a locking lever of the inventive apparatus of Figure 1 at a higher detail;
- Fig. 6:: the damping unit of the inventive apparatus in a perspective view;
- Fig. 7:: the damping unit of the inventive apparatus in a front view;
- Fig. 8:: a housing of the inventive apparatus in a perspective view.

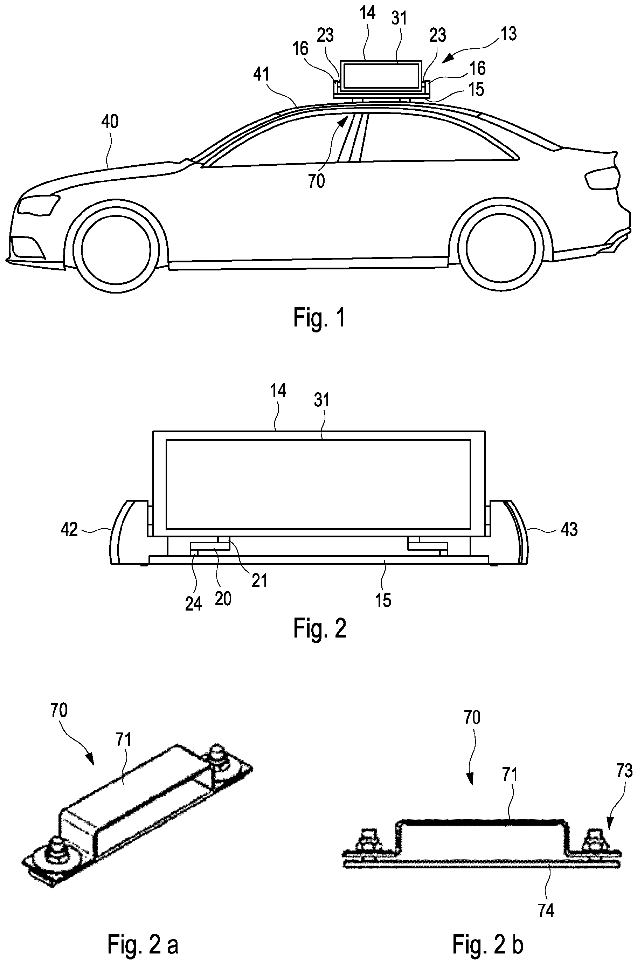

Figure 1 illustrates a side view of an inventive apparatus which is mounted on a roof 41 of a vehicle 40. The apparatus comprises a mounting fixture 13 and a housing 14. A display 31 is arranged inside the housing 14. A further display (which is not visible in Figure 1) is positioned on the other side of the housing 14 such that information can be displayed on both sides of the vehicle. The housing 14 as well as the viewing areas of the displays is arranged essentially parallel to a longitudinal axis of the vehicle and essentially perpendicular to a horizontal plane which is defined by the roof 41.

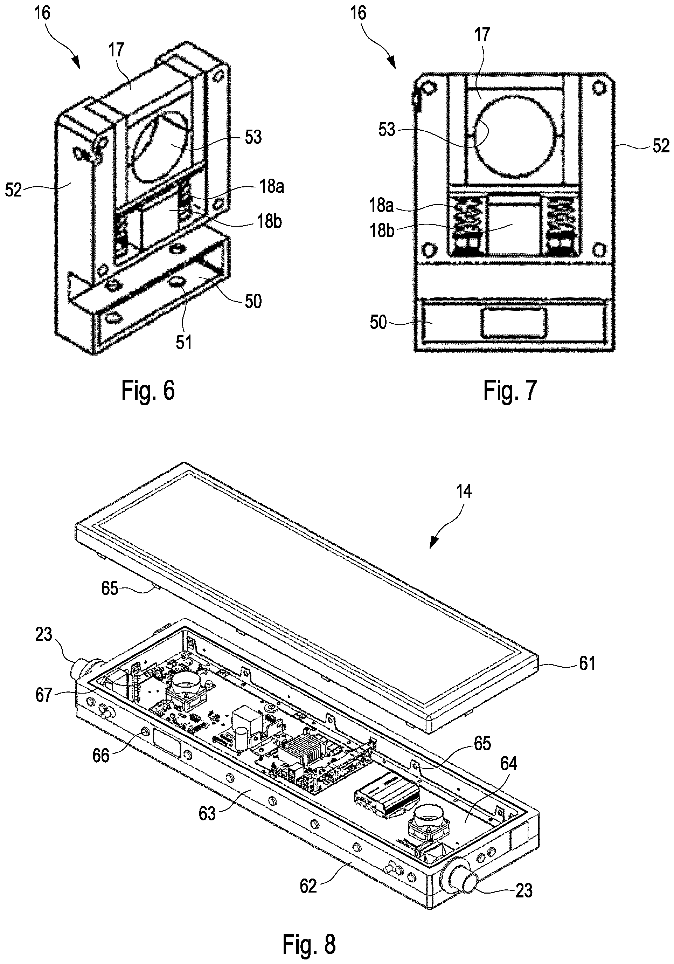

The mounting fixture 13 comprises a carrier 15 which is attached to the roof 41. A longitudinal axis of the carrier 15 is oriented parallel to the longitudinal axis of the vehicle 40. At each of its longitudinal ends the carrier 16 comprises a damping unit 16. The housing 14 is connected to the damping units 16 so that it is suspended above the carrier 15. For this purpose, the housing 14 comprises trunnions 23 located at opposite sides of the housing 14 and extending in a longitudinal direction. The trunnions 23 are inserted into corresponding sockets 53 (not visible in Figure 1 but shown in Figures 6 and 7) of the damping units 16. The damping units 16 are configured such that the housing is movable relative to the carrier 15 against a restoring force. This is further explained with regard to Figures 6-7.

The housing 14 may be rotated about a longitudinal axis defined by the axis of the trunnions 23 from a deployed position (which is shown in Figure 1) into a rest position (not shown). In order to arrest the housing 14 in the deployed position, the apparatus comprises locking levers which are omitted for the sake of clarity in Figure 1 and which are, however, illustrated in Figure 2.

Furthermore, the apparatus comprises a front taxi sign and a back taxi sign which is attached to the longitudinal ends of the mounting fixture 13. The taxi signs are likewise omitted in Figure 1 for the sake of clarity, but are illustrated in Figure 2.

Figure 2 shows an enlarged illustration of the apparatus of Figure 1. The apparatus comprises a first taxi sign 42 directing to the front of the vehicle and a second taxi sign 43 directing to the back of the vehicle. The taxi signs 42, 43 cover the damping units 16 which are therefore not visible in Figure 2.

Furthermore, Figure 2 shows two locking levers 20 each being mounted to the carrier 15 by means of a pivot shaft 24. Each locking lever 20 is rotatable about a vertical axis defined by the pivot shaft 24. The housing 14 furthermore comprises two locking pins 21 which protrude downwards. The locking levers 20 can be brought into engagement with the respective locking pin 21 in order to arrest the housing in the deployed position.

Figure 2a is a perspective view of an attachment bracket 70 for fixing the inventive apparatus to a roof rack of the vehicle 40. Figure 2b shows a front view of the attachment bracket 70. The attachment bracket 70 comprises a clamp element 71 which is angled so that it may firmly engage around the outer circumference of the carrier 15 along a transversal direction of the carrier 15. At each of its longitudinal ends the bracket 70 comprises connecting portions 71 having a through hole through which a fastening element is inserted. By means of the fastening element the bracket may be fixed to a crossbeam 74 of the roof rack of the vehicle. The bracket 70 is configured to firmly clamp the carrier 15 against the cross beam.

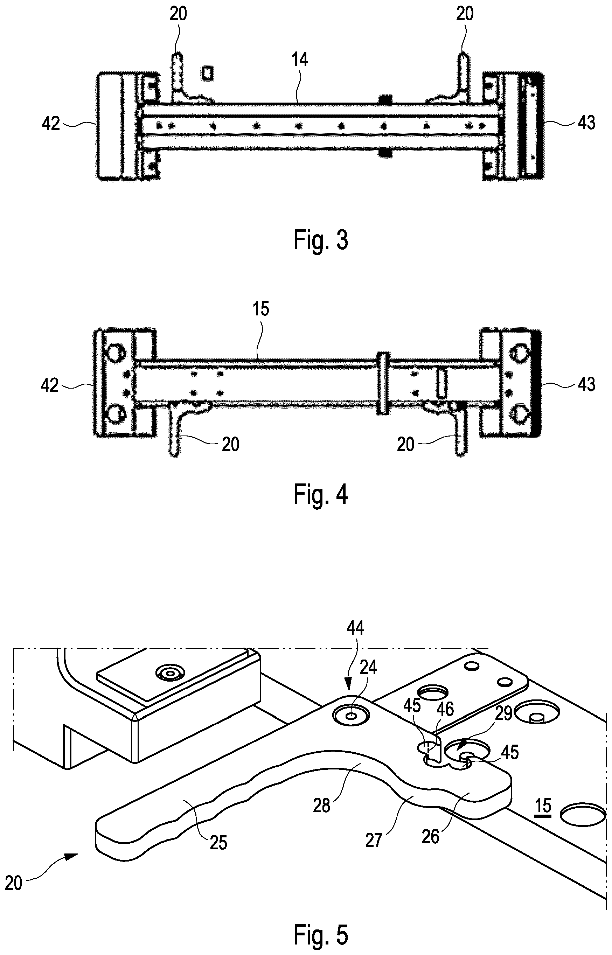

Figure 3 shows the inventive apparatus in a top view and Figure 4 illustrates the inventive apparatus in a bottom view.

From Figures 3 and 4 it can be seen that the locking levers 20 are L-shaped. A user may grasp the longer leg of the levers 20 in order to rotate the lever such that a recess which is positioned at the shorter leg of the levers 20 engages the locking pin 21. This is further explained in relation with Figure 5.

Figure 5 is a three-dimensional illustration of higher detail showing a locking lever 20 which is attached to the carrier 15. The L-shaped lever 20 comprises a long leg 25 and a short leg 26. The pivot shaft 24 which attaches the lever 20 to the carrier 15 is positioned in a transition region 44 between the legs 25, 26. The transition region 44 furthermore comprises a strengthening which is configured as a rounded section 28 arranged inwards of the pivot shaft 24 (the side of the "L" at which the legs 25, 26 face each other is considered as the inner side of the "L").

Furthermore, the short leg 26 comprises a recess 29 which is configured for engagement with the locking pin 21 (not shown in Figure 5). The recess 29 is arranged at the outer side of the short leg 26. At the inner side of the short leg 26 opposite the recess 29 there is provided a further strengthening which is configured as a rounded section 27. By means of the rounded sections 27, 28 the lever is strengthened considerably.

The recess 29 comprises two cavities 45 which are configured to receive a resilient member (not shown in Figure 5). The resilient member is deformed by the locking pin 21 while the locking pin 21 moves relative to the locking lever 20 into the arrested position. The cavities comprise cut-outs at an inner wall thereof. A cut-out 46 is illustrated in Figure 5 by means of a dotted line. The cut-out may be filled with adhesive in order to firmly fix the resilient member into the cavity.

Figure 6 illustrates a damping unit 16 of the inventive apparatus in a perspective view. Figure 7 illustrates the damping unit 16 in a front view. The damping unit 16 comprises a body 52 having a receptacle 50 for receiving an end of the carrier 15. Through-holes 51 are provided through the receptacle to allow insertion of fastening elements which are configured to firmly attach the damping unit 16 to the carrier 15. The damping unit 16 furthermore comprises a mounting member 17 which is linearly movable with regard to the body 52 and, thus, with regard to the carrier 15. The mounting member 17 comprises a circular socket 53 for receiving the trunnion 23 of the housing so that the housing may be suspended on two damping units as illustrated in Figure 1.

The mounting member 17 is connected to the body 52 by means of spring elements 18a. Furthermore, a resilient member 18b being configured as a cube made of resilient material is arranged between the mounting member 17 and the receptacle 50. The body 52 is configured to linearly a guide the mounting member 17 in a vertical direction. However, a clearance of about 1 mm is provided between the outer surface of the mounting member 17 and the inner surfaces of the body 52 facing the mounting member 17. Accordingly, the mounting member 17 may be slightly moved in directions other than the vertical direction. During operation of the vehicle, forces acting on the carrier 15 are at least partially attenuated by the spring elements 18a and/or the resilient member 18b.

Figure 8 illustrates a housing 14 of the inventive apparatus as well as the interior of the housing. The housing 14 comprises a first frame module 61, a second frame module 62, and a middle frame module 63. While, in the assembled state of the housing 14, the middle frame module 63 is arranged between the first frame module 61 and the second frame module 62 such that the first and second frame modules 61, 62 sealingly engage the middle frame module 63, in Figure 8 the first frame module 61 is detached from the other frame modules for illustration purposes.

Figure 8 shows a board 64 comprising electronic components such as control hardware for driving the display, data communication equipment, data storage devices, and sensors. The board 64 is attached to the second frame module 62 such that it is enclosed by the housing (in the assembled state of the housing). On the lower side of the board 64 (not visible in Figure 8) a display is arranged. Furthermore, the second frame module 62 comprises attachment elements 65 which protrude towards the middle frame element 63 in the direction of stacking of the frame modules 61, 62, 63. The attachment elements 65 are configured as connecting plates having through holes. The middle frame module comprises corresponding through-holes formed in its outer circumference, wherein the through-holes of the middle frame module 63 overlap and are aligned with the through-holes of the connecting plates 65. Attachment screws 66 which are accessible from the outside of the housing 14 are inserted through the overlapping through holes in order to fix the second frame module 62 to the middle frame module 63.

It is noted that only every second through-hole provided in the middle frame module 63 is used for connection to the second frame module 62. Every other of the through holes of the middle frame module 63 can be used for connection with the first frame module 61. For this purpose, the first frame module 61 likewise comprises attachment elements 65 being configured as connecting plates having through holes.

The first frame module 61 is configured identical to the second frame module 62. The frame modules 61, 62 therefore may be interchangeably used on both sides of the middle frame module 63.

Prior to assembly of the housing 14, a sealing element 67 being configured as an endless band made of elastic material (illustrated only schematically in Figure 8) is placed between the first frame module 61 and the middle frame module 63 as well as between the second frame module 62 and the middle frame module 63. In Figure 8, the sealing element 67 is placed on a sealing surface of the middle frame module 63 which is arranged along an outer contour of the middle frame module 63 which faces in the direction of stacking. The first and second frame modules 61, 62 comprise corresponding sealing surfaces arranged along their respective outer contour. During assembly, the sealing element 67 is compressed between the ceiling surfaces of the middle frame module 63 and the respective first or second frame module 61, 62. The attachment elements of the first, second, and middle frame modules 61, 62, 63 are configured such that an overlap of the attachment elements comes along with a sufficient compression of the sealing element 67 so that a sufficient ceiling action is ensured.

## Claims

1. Apparatus for mounting on a vehicle roof (41), comprising a housing (14) which encloses at least one display (31, 34), and a mounting fixture (13) configured to support the housing (14), wherein the mounting fixture (13) comprises a carrier (15) being attachable to the roof (41) and a damping unit (16) which connects the carrier (15) to the housing (14), wherein the damping unit (16) is configured to allow movement of the housing (14) relative to the carrier (15) against a restoring force, **characterized in that** the damping unit (16) comprises a mounting member (17) which holds the housing (14) and a restoring element (18a, 18b) which is arranged between the mounting member (17) and the carrier (15) wherein the mounting member (17) is arranged above the carrier (15), wherein the damping unit comprises a guide (52) for linearly guiding the mounting member with regard to the carrier.

2. Apparatus according to claim 1, wherein the mounting member (17) is movable along a direction which encloses an angle with a horizontal plane which is between 70° and 110°, preferably between 80° and 100°, further preferably between 85° and 95°.

3. Apparatus according to claim 2, wherein the guide has a clearance allowing movement of the mounting member (17) along at least one direction being perpendicular to the axis of the guide, the clearance being smaller than 10 mm, preferably smaller than 5 mm, further preferably smaller than 3 mm, even further preferably smaller than 1,5 mm.

4. Apparatus according to one of claims 1 to 3, wherein the restoring element (18a) comprises a spring element, wherein the spring element preferably connects the mounting member (17) to the carrier (15).

5. Apparatus according to one of claims 1 to 4, wherein the restoring element (18b) comprises a resilient member.

6. Apparatus according to one of claims 1 to 5, wherein the housing (14) is configured to be rotatable between a deployed position and a rest position, wherein the apparatus further comprises a locking lever (20) configured to be moved into a locking position to arrest the housing (14) in the deployed position, wherein the locking lever (20) comprises a recess (29) for engaging around a locking pin (21) of the housing (14), wherein a resilient locking member is arranged in the recess (29), the resilient locking member being configured to be deformed upon movement of the locking lever (20) into the locking position, wherein the resilient locking member is preferably configured to engage behind the locking pin (21) in the locking position.

7. Apparatus according to claim 6, wherein the recess (29) comprises a cavity (45) for receiving the resilient locking member, wherein the resilient locking member is attached to the locking lever (20 ) by means of an adhesive, wherein an inner wall of the cavity (45) preferably comprises at least one cutout for receiving the adhesive.

8. Apparatus according to one of claims 1 to 7, comprising a first display (31) having a first viewing side and a second display (31) having a second viewing side, wherein the housing (14) encloses the first display (31) and the second display (31) and wherein the housing (14) comprises:
- a first frame module (61) enclosing the first viewing side and a circumference of the first display (31),
- a second frame module (62) enclosing the second viewing side and a circumference of the second display (31), and
- a middle frame module (63) being arranged between the first and second frame modules (61, 62) and configured to sealingly engage the first and second frame modules (61, 62) so that the first display (31) and the second display (31) are enclosed by the housing (14).

9. Apparatus according to claim 8, wherein the first and second frame modules (61, 62) each comprise attachment elements (65) which overlap with corresponding attachment elements of the middle frame module (63), wherein the overlapping attachment elements are accessible from the outside of the housing (14) to allow fixing the first and/or second frame modules (61, 62) to the middle frame module (63).

10. Apparatus according to claim 9, wherein the middle frame module (63) has a first group of attachment elements overlapping with the attachment elements (65) of the first frame module (61) and a second group of attachment elements overlapping with the attachment elements (65) of the second frame module (62).

11. Apparatus according to one of claims 9 or 10, wherein the attachment elements (65) comprise through-holes which overlap in the assembled state of the housing (14), wherein fastening elements (66) are inserted through the overlapping through-holes, wherein preferably a sealing element (67) is placed between at least one of the first or second frame modules (61, 62) and the middle frame module (63), wherein the attachment elements are further preferably positioned such that the overlap of the attachment elements comes along with a compression of the sealing element (67).

12. Apparatus according to one of claims 8 to 11, wherein the first frame module (61) is configured such that it can be interchangeably used as a second frame module (62).

13. Apparatus according to one of claims 1 to 12, further comprising
- at least one sensor configured for the collection of traffic data and/or environmental data and/or geographic position data and/or demographic data and
- a control unit for controlling the display depending on the data collected by the at least one sensor.

14. Kit comprising an apparatus according to one of claims 1 to 13 and at least one attachment bracket (70) for fixing the carrier (15) to a roof rack of the vehicle (40).

## Patentansprüche

1. Vorrichtung zur Montage an einem Fahrzeugdach (41), umfassend ein Gehäuse (14), das mindestens eine Anzeige (31, 34) umschließt, und eine Montageeinrichtung (13), die dazu ausgelegt ist, das Gehäuse (14) abzustützen, wobei die Montageeinrichtung (13) einen am Dach (41) befestigbaren Träger (15) und eine Dämpfereinheit (16), die den Träger (15) mit dem Gehäuse (14) verbindet, umfasst, wobei die Dämpfereinheit (16) dazu ausgelegt ist, die Bewegung des Gehäuses (14) in Bezug zum Träger (15) entgegen einer Rückstellkraft zuzulassen, **dadurch gekennzeichnet, dass** die Dämpfereinheit (16) ein Montageglied (17), welches das Gehäuse (14) hält, und ein Rückstellelement (18a, 18b), das zwischen dem Montageglied (17) und dem Träger (15) angeordnet ist, umfasst, wobei das Montageglied (17) über dem Träger (15) angeordnet ist, wobei die Dämpfereinheit eine Führung (52) zum linearen Führen des Montageglieds in Bezug zum Träger umfasst.

2. Vorrichtung nach Anspruch 1, wobei das Montageglied (17) entlang einer Richtung beweglich ist, die einen Winkel zu einer horizontalen Ebene umschließt, der zwischen 70° und 110°, vorzugsweise zwischen 80° und 100°, weiter bevorzugt zwischen 85° und 95° beträgt.

3. Vorrichtung nach Anspruch 2, wobei die Führung einen Abstand aufweist, der die Bewegung des Montageglieds (17) entlang mindestens einer Richtung zulässt, die senkrecht zur Achse der Führung verläuft, wobei der Abstand kleiner als 10 mm, vorzugsweise kleiner als 5 mm, weiter bevorzugt kleiner als 3 mm, noch weiter bevorzugt kleiner als 1,5 mm ist.

4. Vorrichtung nach einem der Ansprüche 1 bis 3, wobei das Rückstellelement (18a) ein Federelement umfasst, wobei das Federelement vorzugsweise das Montageglied (17) mit dem Träger (15) verbindet.

5. Vorrichtung nach einem der Ansprüche 1 bis 4, wobei das Rückstellelement (18b) ein elastisches Glied umfasst.

6. Vorrichtung nach einem der Ansprüche 1 bis 5, wobei das Gehäuse (14) dazu ausgelegt ist, zwischen einer ausgefahrenen Position und einer Ruheposition drehbar zu sein, wobei die Vorrichtung ferner einen Verriegelungshebel (20) umfasst, der dazu ausgelegt ist, in eine Verriegelungsposition bewegt zu werden, um das Gehäuse (14) in der ausgefahrenen Position zu arretieren, wobei der Verriegelungshebel (20) eine Aussparung (29) zum Eingriff um einen Verriegelungsstift (21) des Gehäuses (14) umfasst, wobei ein elastische Verriegelungsglied in der Aussparung (29) angeordnet ist, wobei das elastische Verriegelungsglied dazu ausgelegt ist, bei der Bewegung des Verriegelungshebels (20) in die Verriegelungsposition verformt zu werden, wobei das elastische Verriegelungsglied vorzugsweise dazu ausgelegt ist, hinter dem Verriegelungsstift (21) in der Verriegelungsposition einzugreifen.

7. Vorrichtung nach Anspruch 6, wobei die Aussparung (29) einen Hohlraum (45) zur Aufnahme des elastischen Verriegelungsglieds umfasst, wobei das elastische Verriegelungsglied mittels eines Klebstoffs am Verriegelungshebel (20) befestigt ist, wobei eine Innenwand des Hohlraums (45) vorzugsweise mindestens einen Ausschnitt zur Aufnahme des Klebstoffs umfasst.

8. Vorrichtung nach einem der Ansprüche 1 bis 7, umfassend eine erste Anzeige (31), die eine erste Betrachtungsseite aufweist, und eine zweite Anzeige (31), die eine zweite Betrachtungsseite aufweist, wobei das Gehäuse (14) die erste Anzeige (31) und die zweite Anzeige (31) umschließt und wobei das Gehäuse (14) Folgendes umfasst:
- ein erstes Rahmenmodul (61), das die erste Betrachtungsseite und einen Umfang der ersten Anzeige (31) umschließt,
- ein zweites Rahmenmodul (62), das die zweite Betrachtungsseite und einen Umfang der zweiten Anzeige (31) umschließt, und
- ein mittleres Rahmenmodul (63), das zwischen dem ersten und zweiten Rahmenmodul (61, 62) angeordnet und dazu ausgelegt ist, dichtend in das erste und zweite Rahmenmodul (61, 62) einzugreifen, sodass die erste Anzeige (31) und die zweite Anzeige (31) vom Gehäuse (14) umschlossen sind.

9. Vorrichtung nach Anspruch 8, wobei das erste und zweite Rahmenmodul (61, 62) jeweils Befestigungselemente (65) umfassen, die zugehörige Befestigungselemente des mittleren Rahmenmoduls (63) überlagern, wobei die überlagernden Befestigungselemente von außerhalb des Gehäuses (14) zugänglich sind, um das erste und/oder zweite Rahmenmodul (61, 62) am mittleren Rahmenmodul (63) fixieren zu können.

10. Vorrichtung nach Anspruch 9, wobei das mittlere Rahmenmodul (63) eine erste Gruppe Befestigungselemente, welche die Befestigungselemente (65) des ersten Rahmenmoduls (61) überlagern, und eine zweite Gruppe Befestigungselemente, welche die Befestigungselemente (65) des zweiten Rahmenmoduls (62) überlagern, aufweist.

11. Vorrichtung nach einem der Ansprüche 9 oder 10, wobei die Befestigungselemente (65) Durchgangsbohrungen umfassen, welche einander im montierten Zustand des Gehäuses (14) überlagern, wobei Befestigungselemente (66) durch die überlagernden Durchgangsbohrungen eingesetzt werden, wobei vorzugsweise ein Dichtungselement (67) zwischen mindestens einem des ersten oder zweiten Rahmenmoduls (61, 62) und dem mittleren Rahmenmodul (63) platziert ist, wobei die Befestigungselemente ferner vorzugsweise derart positioniert sind, dass die Überlagerung der Befestigungselemente mit der Kompression des Dichtungselements (67) einhergeht.

12. Vorrichtung nach einem der Ansprüche 8 bis 11, wobei das erste Rahmenmodul (61) derart ausgelegt ist, dass es austauschbar als zweites Rahmenmodul (62) verwendbar ist.

13. Vorrichtung nach einem der Ansprüche 1 bis 12, ferner Folgendes umfassend:
- mindestens einen Sensor, der zur Sammlung von Verkehrsdaten und/oder Umgebungsdaten und/oder geografischen Positionsdaten und/oder demografischen Daten ausgelegt ist, und
- eine Steuereinheit zum Steuern der Anzeige in Abhängigkeit von den vom mindestens einen Sensor gesammelten Daten.

14. Satz, umfassend eine Vorrichtung nach einem der Ansprüche 1 bis 13 und mindestens eine Befestigungskonsole (70) zum Fixieren des Trägers (15) an einem Dachgepäckträger des Fahrzeugs (40).

## Revendications

1. Appareil à monter sur le toit d'un véhicule (41), comprenant un boîtier (14) qui entoure au moins un écran (31, 34), et un dispositif de montage (13) conçu pour supporter le boîtier (14), le dispositif de montage (13) comprenant un support (15) pouvant être fixé au toit (41) et une unité d'amortissement (16) qui relie le support (15) au boîtier (14), l'unité d'amortissement (16) étant conçue pour permettre le déplacement du boîtier (14) par rapport au support (15) à l'encontre d'une force de rappel, **caractérisé en ce que** l'unité d'amortissement (16) comprend un élément de montage (17) qui maintient le boîtier (14) et un élément de rappel (18a, 18b) qui est disposé entre l'élément de montage (17) et le support (15), l'élément de montage (17) étant disposé au-dessus du support (15), l'unité d'amortissement comprenant un guide (52) pour guider linéairement l'élément de montage par rapport au support.

2. Appareil selon la revendication 1, l'élément de montage (17) étant mobile le long d'une direction qui englobe un angle avec un plan horizontal qui est compris entre 70° et 110°, de préférence entre 80° et 100°, de préférence encore entre 85° et 95°.

3. Appareil selon la revendication 2, le guide ayant un jeu permettant le déplacement de l'élément de montage (17) le long d'au moins une direction perpendiculaire à l'axe du guide, le jeu étant inférieur à 10 mm, de préférence inférieur à 5 mm, de préférence encore inférieur à 3 mm, plus préférentiellement encore inférieur à 1,5 mm.

4. Appareil selon l'une des revendications 1 à 3, l'élément de rappel (18a) comprenant un élément à ressort, l'élément à ressort reliant de préférence l'élément de montage (17) au support (15).

5. Appareil selon l'une des revendications 1 à 4, l'élément de rappel (18b) comprenant un élément élastique.

6. Appareil selon l'une des revendications 1 à 5, le boîtier (14) étant conçu pour être rotatif entre une position déployée et une position de repos, l'appareil comprenant en outre un levier de verrouillage (20) conçu pour être déplacé dans une position de verrouillage pour arrêter le boîtier (14) dans la position déployée, le levier de verrouillage (20) comprenant un renfoncement (29) pour venir en prise autour d'une goupille de verrouillage (21) du boîtier (14), un élément de verrouillage élastique étant disposé dans le renfoncement (29), l'élément de verrouillage élastique étant conçu pour être déformé lors du déplacement du levier de verrouillage (20) dans la position de verrouillage, l'élément de verrouillage élastique étant de préférence conçu pour venir en prise derrière la goupille de verrouillage (21) dans la position de verrouillage.

7. Appareil selon la revendication 6, le renfoncement (29) comprenant une cavité (45) pour recevoir l'élément de verrouillage élastique, l'élément de verrouillage élastique étant fixé au levier de verrouillage (20) au moyen d'un adhésif, une paroi intérieure de la cavité (45) comprenant de préférence au moins une découpe pour recevoir l'adhésif.

8. Appareil selon l'une des revendications 1 à 7, comprenant un premier écran (31) ayant un premier côté de visualisation et un second écran (31) ayant un second côté de visualisation, le boîtier (14) entourant le premier écran (31) et le second écran (31) et le boîtier (14) comprenant :
un premier module de cadre (61) entourant le premier côté de visualisation et une circonférence du premier écran (31),
un second module de cadre (62) entourant le second côté de visualisation et une circonférence du second écran (31), et
un module de cadre central (63) disposé entre les premier et second modules de cadre (61, 62) et conçu pour venir en prise de manière étanche avec les premier et second modules de cadre (61, 62) de sorte que le premier écran (31) et le second écran (31) soient entourés par le boîtier (14).

9. Appareil selon la revendication 8, les premier et second modules de cadre (61, 62) comprenant chacun des éléments de fixation (65) qui chevauchent des éléments de fixation correspondants du module de cadre central (63), les éléments de fixation chevauchants étant accessibles depuis l'extérieur du boîtier (14) pour permettre la fixation des premier et/ou second modules de cadre (61, 62) au module de cadre central (63).

10. Appareil selon la revendication 9, le module de cadre central (63) ayant un premier groupe d'éléments de fixation chevauchant les éléments de fixation (65) du premier module de cadre (61) et un second groupe d'éléments de fixation chevauchant les éléments de fixation (65) du second module de cadre (62).

11. Appareil selon l'une des revendications 9 ou 10, les éléments de fixation (65) comprenant des trous traversants qui se chevauchent à l'état assemblé du boîtier (14), les éléments de fixation (66) étant insérés à travers les trous traversants chevauchant, de préférence, un élément d'étanchéité (67) étant placé entre au moins un du premier ou second module de cadre (61, 62) et le module de cadre central (63), les éléments de fixation étant en outre de préférence positionnés de sorte que le chevauchement des éléments de fixation s'accompagne d'une compression de l'élément d'étanchéité (67) .

12. Appareil selon l'une des revendications 8 à 11, le premier module de cadre (61) étant conçu de sorte à pouvoir être utilisé de façon interchangeable comme second module de cadre (62).

13. Appareil selon l'une des revendications 1 à 12, comprenant en outre
au moins un capteur conçu pour la collecte de données de trafic et/ou de données environnementales et/ou de données de position géographique et/ou de données démographiques et
une unité de commande pour commander l'écran en fonction des données collectées par l'au moins un capteur.

14. Kit comprenant un appareil selon l'une des revendications 1 à 13 et au moins un support de fixation (70) pour fixer le support (15) à une galerie de toit du véhicule (40).
